# EUROPEAN PATENT SPECIFICATION

(11) **EP 0 397 890 B1**
(45) Date of publication and mention of the grant of the patent: **07.09.1994**
(21) Application number: 89912673.4
(22) Date of filing: 18.11.1989
(51) Int. Cl.: A23L 1/312, A23J 1/06, G01N 33/48

(54) **PROCESS FOR PURIFYING BLOOD PLASMA**
VERFAHREN ZUR REINIGUNG VON BLUTPLASMA
PROCEDE DE PURIFICATION DE PLASMA SANGUIN

(30) Priority: 18.11.1988 JP 290107/88; 18.11.1988 JP 290108/88; 14.12.1988 JP 312963/88; 24.03.1989 JP 170572/89
(43) Date of publication of application: 22.11.1990
(73) Proprietor: TOSOH CORPORATION, Yamaguchi 746 (JP)
(72) Inventor: SAITO, Shuuji, Kanagawa 252 (JP); MISAWA, Kouichi 215, Shirahatamukai-cho, Kanagawa 221 (JP); MAKINO, Eiichi, Kanagawa 252 (JP); HAGI, Takashi Room 402 Tsudagakuen Bldg., Mie 510 (JP); KADOTA, Noriaki, Mie 510-12 (JP); TODA, Yoshiro, Mie 513 (JP)
(74) Representative: Cohausz & Florack Patentanwälte
(86) International application number: JP8901179
(87) International publication number: WO9005461

(56) References cited:
- WO-A-89/00816
- FR-A- 1 330 710
- FR-A- 2 540 350
- JP-B- 4 946 767
- JP-B- 6 015 297
- WPI/DERWENT, accession no. 80-91727C [51], Derwent Publications Ltd, London, GB; & SU-A-732 207 (S.P. VAWEVA et al.) 09-05-1980

## Description

### TECHNICAL FIELD

The present invention relates to a process for the purification of plasma. More particularly, the present invention relates to a process for deodorizing and decoloring plasma to be used for foods.

### BACKGROUND ART

Blood of beef or pork is collected at a slaughterhouse, sodium citrate is immediately added to the collected blood, to prevent a coagulation of the blood, and the blood is separated into plasma and hemocytes by centrifugal separation. At the slaughterhouse, a certain advance of the hemolysis at this stage cannot be avoided, and accordingly, hemocytes are contained in plasma now used for food. Therefore, when plasma collected at the slaughterhouse is directly heated, to effect gelation, a problem of coloration of the gel arises, and therefore, the field of application of the gel is restricted.

Another problem is that a plasma powder obtained by drying a plasma thus obtained from a slaughterhouse has particularly unpleasant smell and taste. This unpleasant smell and taste are weak at the time of the preparation but become strong with a lapse of time, and accordingly, the commercially available plasma powders all have an unpleasant smell and taste. A plasma powder is used as a quality modifier for foods, especially for increasing the water-retaining property and elasticity thereof, but if the plasma powder is added in a large amount, the taste and flavor of a food are bad. Accordingly, the amount of the plasma powder added is restricted, and in many cases, satisfactory results cannot be obtained. Therefore, the development of a plasma powder having an improved smell and taste, which does not degrade the taste and flavor of a food, is desired.

If a plasma is subjected to decoloring and deodorizing treatments to prevent a coloration of the plasma gel and eliminate an unpleasant smell and taste, an adsorbent used during the treatments, proteins modified and insolubilized during the treatments, and fungi are present in the treated plasma, and these substances must be removed.

### DISCLOSURE OF THE INVENTION

A primary object of the present invention is to provide a process in which a plasma-derived protein with less smell and a reduced coloring substance content can be obtained by a simple operation. Another object of the present invention is to provide a process in which impurities contained in a plasma, especially impurities incorporated and produced in the plasma when the plasma is decolored and deodorized (i.e., adsorbents used for removing coloring substances and unpleasant smells and insoluble proteins formed at the removal treatments), can be efficiently and economically advantageously removed.

In accordance with one aspect of the present invention, there is provided a process for the purification of plasma, wherein substances contained in plasma and causing a coloration thereof are removed, which comprises treating the plasma with an acidic or basic substance to modify hemoglobin causing the coloration and removing the modified hemoglobin.

In accordance with another aspect of the present invention, there is provided a process for the purification of plasma, wherein substances contained in the plasma and causing a coloration thereof are removed, which comprises treating the plasma with an activated carbon under an acidic condition.

In accordance with the present invention, there is provided a process for the purification of plasma by removing coloration-causing substances including hemoglobin from the plasma, which comprises the steps of:
adding an acidic substance to plasma to adjust the pH value to 3 to 6 or adding a basic substance to plasma to adjust the pH value to 9 to 13;
maintain the plasma at a temperature of 0 to 40°C with stirring whereby the hemoglobin is modified; and thereafter
removing the modified hemoglobin from the plasma; said process for the purification of plasma being free from the step of treating the plasma with an oxidizing agent.

Alternatively, 0.001 to 10% by weight based on the weight of the plasma of a polymeric electrolyte having a carboxyl group is added to the plasma and the mixture is maintained at a temperature of 0 to 50°C. By adding an acid to the mixture the pH value is adjusted to 1 to 5 whereby the hemoglobin is modified and thereafter removed from the plasma. Also this process for the purification of plasma is free from the step of treating the plasma with an oxidizing agent.

### BEST MODE FOR CARRYING OUT THE INVENTION

Plasma obtained from blood of an animal is used in the present invention, and even if hemocytes formed by hemolysis are contained in the plasma, this plasma can be used as the starting material without problems or disadvantages.

In the process for the purification of plasma according to the present invention, the modified hemoglobin is treated with an acidic or basic substance to adjust the pH value to 7 to 8 and thereafter the modified hemoglobin is removed from the plasma.

In this treatment process, an acidic substance or basic substance is added to plasma, and the mixture is stirred in the state for a while. At his treatment, the pH value must be maintained within a range such that, among proteins contained in the plasma, the hemoglobin is modified but albumin having a gelling property is not modified. The pH value of the liquid at this treatment is 3 to 6, preferably 3.5 to 5, under an acidic condition, or 9 to 13, preferably 11 to 12, under a basic condition. To adjust the pH value, in view of the use of basic condition. To adjust the pH value, in view of the use of the obtained plasma as a food additive, preferably a substance allowed to be used in the food preparation processes is utilized . For example, hydrochlorid acid, phosphoric acid, and acetic acid are used for an acidic condition, and sodium hydroxide and potassium hydroxide are used for a basic condition. The solution in which the acidic or basic substance has been incorporated is stirred at a temperature at which a thermal modification of albumin contained in the plasma will not occur, i.e., 0 to 40°C, preferably for 1 to 90 minutes, whereby the hemoglobin is modified and then removed. Removal of the hemoglobin can be carried out under the same acidic or basic condition as adopted for the modification, or the removal can be performed after the pH value is returned to a substantially neutral value of 7 to 8 by adding dropwise the above-mentioned base or acid into the treated solution. Preferably, however, the removal is carried out after the pH value is once returned to a neutral level.

In the process for the purification of plasma according to the present invention, the plasma may be treated with activated carbon under an acidic condition.

The amount of activated carbon added is preferably 0.5 to 10% by weight based on the plasma. An acidic substance is added to produce an acidic condition. During this treatment, the condition must be adjusted so that albumin having a gelling property, which is contained in plasma, is not modified or gelled, but the hemoglobin is rendered easily adsorbable by activated carbon. The pH value of the liquid is 3 to 6, preferably 3.5 to 5. In view of the use of the obtained plasma as a food additive, hydrochloric acid, phosphoric acid, and acetic acid, which can be used in the food preparation processes, are preferably used for the adjustment of the pH value.

After activated carbon and the acidic substance have been added, the mixture is stirred at a temperature of 0 to 40°C, preferably for about 10 minutes to about 24 hours. The treatment is completed by removing activated carbon. The removal of activated carbon can be carried out directly under the acidic condition, or the removal can be performed after the pH value is adjusted to 7 to 8 by an addition of an alkaline substance. A substance which can be used in the food preparation processes, such as sodium hydroxide or potassium hydroxide, is preferably used for the adjustment of the pH value.

The order of the addition of activated carbon and the acidic substance is not particularly critical, but in view of the decoloring and deodorizing effects, preferably the activated carbon is first added and then the acidic substance is added.

According to the process comprising treating plasma with activated carbon under an acidic condition, hemoglobin can be removed more completely than in the process comprising treating plasma only with an acidic substance or basic substance.

The process for the purification of plasma according to the present invention may comprise adding a polymeric electrolyte having a carboxyl group to plasma and treating the mixture with an acid.

A plasma-containing solution contains various trace components in addition to proteins, and it is considered that these trace components cause the generation of an unpleasant smell. For example, it is considered that a lipid reacts with oxygen under ultraviolet rays and is converted to a peroxide generating an unpleasant smell. It is also considered that a metal ion promotes this peroxide-forming reaction. Moreover, an insolubilized protein observed when frozen plasma is used is also considered to generate an unpleasant smell. According to the purification process of the present invention using a polymeric electrolyte having a carboxyl group, substances causing a generation of unpleasant smells can be removed substantially completely.

In this process, preferably plasma is first mixed with a polymeric electrolyte having a carboxyl group, and the mixture is stirred at a temperature of about 0 to about 50°C, preferably for about 10 to about 60 minutes. In view of the use of the obtained plasma for a food, a substance which can be used in the food preparation processes, such as alginic acid, sodium alginate, polyacrylic acid, sodium polyacrylate or carboxymethyl cellulose, is preferably used as the polymeric electrolyte having a carboxyl group. The addition of the polymeric electrolyte can be performed by dissolving the polymeric electrolyte into the starting solution containing plasma, or by forming an aqueous solution of the polymeric electrolyte in advance and incorporating this aqueous solution into the starting solution containing plasma. In view of the operation adaptability of equipment at a solution viscosity increased by the addition of the polymeric electrolyte and the ease of the operation of removing the gelled polymeric electrolyte, the amount of the polymeric electrolyte added is adjusted to 0.001 to 10% by weight, preferably about 0.01 to about 5% by weight, based on the plasma to be treated. To increase the purification degree, activated carbon can be added to the polymeric electrolyte and used in combination therewith.

Then, the pH value of the solution is adjusted within a range such that the added polymeric electrolyte is gelled and proteins are little modified If the solution is too acidic, the dissolved proteins are damaged. Accordingly, the pH value is adjusted to 1 to 5, preferably about 3 to about 4. Then, the insoluble substances and formed precipitates are removed by filtration, and a preferably basic substance is added to the obtained supernatant to adjust the pH value to a neutral level. In view of the use of the obtained protein for a food, substances which can be used in the food preparation processes are preferably used for the adjustment of the pH value. For example, hydrochloric acid, acetic acid and phosphoric acid are used as the acidic substance and sodium hydroxide and potassium hydroxide are used as the basic substance. The obtained solution is subjected to an appropriate treatment such as a concentrating treatment and is then dried according to customary procedures to obtain a plasma protein having a controlled unpleasant smell.

In the process for the purification of plasma according to the present invention, the removal of the modified hemoglobin from the plasma is preferably carried out by using a ceramic filter.

Plasma contains impurities such as modified proteins. Especially, plasma obtained through decoloring and deodorizing treatments contains activated carbon used as the adsorbent, modified and insolubilized proteins presumed to be formed during these treatments, and living fungi. These impurities can be removed very efficiently by a ceramic filter treatment.

In this treatment process, the treatment is completed by filtering plasma through a ceramic filter. A commercially available ceramic filter can be used. The pore size of the ceramic filter depends on the sizes of the contained impurities, and it is impossible to specify the pore size simply. Nevertheless, the use of a ceramic filter having a pore size not larger than 25 µm, especially a pore size not larger than 5 µm, is preferable.

The filtrate obtained by the ceramic filter treatment contains little impurities in the plasma, especially decoloring and deodorizing agents used for the decoloring and deodorizing treatments, such as activated carbon, living fungi and modified and insolubilized proteins, and only proteins and salts dissolved in water are contained in the filtrate. Therefore, plasma proteins obtained by the ceramic filter treatment have an increased commercial value and are advantageous in that a high concentration speed is attained at the subsequent membrane concentration step and a degradation of the membrane can be prevented.

Preferably a polymeric electrolyte having a carboxyl group and activated carbon are added in combination to plasma and the mixture is subjected to an acid treatment. More specifically, activated carbon and a polymeric electrolyte having a carboxyl group are added to plasma, and the mixture is stirred at about 10 to about 50°C for about 10 minutes to about 4 hours. The kind, amount added and addition method of the polymeric electrolyte are as mentioned above, and activated carbon is preferably added in an amount of about 3 to about 25% by weight based on proteins contained in the liquid. Then, the above-mentioned acid treatment is carried out to obtain deodorized and decolored proteins.

By the combined addition of a polymeric electrolyte having a carboxyl group and activated carbon, a plasma having a greatly reduced color and smell can be obtained. Further, if filtration using a ceramic filter is conducted after the treatments with the polymeric electrolyte and activated carbon, then a plasma most suitable as a food or a food additive can be obtained.

Regarding the order of the treatments, a process is preferably adopted in which plasma is first treated with the polymeric electrolyte, the activated carbon treatment is then carried out, and the modification by changing the pH value is finally performed. Plasma having a greatly reduced coloration can be obtained according to this process.

If the ceramic filter treatment is finally carried out after the above-mentioned treatments, a plasma most suitable as a food or a food additive can be obtained.

The present invention will now be described in detail with reference to the following examples.

In each of the examples, the protein content was determined by using a burette reagent, and the hemoglobin content was determined by measuring the absorbance of hemine at 410 nm. The hemoglobin concentration in proteins was expressed by the ratio (A)/(B) of the absorbance (A) of hemine to the protein concentration (B) (mg/ml).

### Example 1

Plasma was obtained by centrifugal separation of swine blood, and hemocytes were added to the plasma to obtain the following samples.
- Sample 1 (control):: 50 g of swine plasma
- Sample 2:: 50 g of swine plasma and 1.0 g of swine hemocytes
- Sample 3:: 50 g of swine plasma and 2.0 g of swine hemocytes
- Sample 4:: 50 g of swine plasma and 5.0 g of swine hemocytes
The protein content and hemoglobin content of each sample were measured.

The prepared samples were subjected to the following treatments at room temperature.
1) Hydrochloric acid was added to the sample to adjust the pH value of the liquid to 4.0, and the mixture was stirred for 30 minutes.
2) Sodium hydroxide was added to adjust the pH value to a neutral level, and the mixture was stirred for 30 minutes.
3) Precipitated modified hemoglobin was removed by filtration.

The protein concentration and hemoglobin content in the obtained supernatant of each sample were measured, and the hemoglobin concentration was calculated from these values. The results are shown in Table 1.

**Table 1**

| | Sample No. | Hemine peak (A) | Protein concentration (B) (mg/ml) | Hemoglobin concentration [(A)/(B)] |
|---|---|---|---|---|
| Before treatment | 1 | 1.0 | 85 | 0.01 |
| | 2 | 21.6 | 102 | 0.21 |
| | 3 | 43.6 | 110 | 0.40 |
| | 4 | 99.2 | 118 | 0.84 |
| After treatment | 1 | 1.0 | 77 | 0.01 |
| | 2 | 14.8 | 84 | 0.18 |
| | 3 | 25.6 | 84 | 0.30 |
| | 4 | 38.4 | 80 | 0.48 |

From the results shown in Table 1, it is seen that the amount of hemoglobin relative to the amount of proteins was reduced in each sample by the treatment, and the removal ratio was higher as the hemoglobin was contained in a larger amount in plasma.

When the obtained solution was spray-dried, it was found that, as the amount of hemoglobin contained in proteins was smaller, the smell was better controlled.

### Example 2

After 10% by weight of hemocytes were added to swine plasma, the following treatments were carried out at room temperature.
1) Hydrochloric acid was added to adjust the pH value of the liquid to 3.0 (sample 5), 4.0 (sample 6) or 5.0 (sample 7), and the mixture was stirred for 30 minutes.
2) Sodium hydroxide was added to adjust the pH value of the liquid to a neutral level, and the mixture was stirred for 30 minutes.
3) Precipitated modified hemoglobin was removed by filtration.

Separately, after 10% by weight of hemocytes were added to swine plasma, the following treatments were carried out at room temperature.
1) Sodium hydroxide was added to adjust the pH value of the liquid to 12.0 (sample 8) or 13.0 (sample 9), and the mixture was stirred for 30 minutes.
2) Hydrochloric acid was added to adjust the pH value to a neutral level, and the mixture was stirred for 30 minutes.
3) Precipitated modified hemoglobin precipitated was removed by filtration.

The amounts of proteins and hemoglobin of each sample before and after the treatments in the supernatant were measured. The results are shown in Table 2.

**Table 2**

| | Sample No. | Hemine peak (A) | Protein concentration (B) (mg/ml) | Hemoglobin concentration [(A)/(B)] |
|---|---|---|---|---|
| Before treatment | 5 | 93 | 88.5 | 1.05 |
| | 6 | 99 | 88.0 | 1.13 |
| | 7 | 88 | 85.5 | 1.03 |
| | 8 | 90 | 86.0 | 1.05 |
| | 9 | 90 | 86.0 | 1.05 |
| After treatment | 5 | 36 | 60.0 | 0.60 |
| | 6 | 43 | 80.0 | 0.54 |
| | 7 | 62 | 79.0 | 0.78 |
| | 8 | 64 | 72.0 | 0.89 |
| | 9 | 27 | 42.0 | 0.64 |

### Example 3

Hydrochloric acid was added to swine plasma containing hemocytes (sample 10, control) at room temperature to adjust the pH value to 4, and the mixture was stirred for 20 minutes. Precipitates were removed, and the obtained supernatant (sample 11) was mixed with 5% by weight (sample 12), 10% by weight (sample 13), 15% by weight (sample 14), 20% by weight (sample 15), 25% by weight (sample 16) or 30% by weight (sample 16) of activated carbon based on the amount of proteins. The mixture was stirred for 3 hours and the added activated carbon was removed by filtration. Sodium hydroxide was added to the filtrate to adjust the pH value to 7. The protein concentration and the hemoglobin content of each sample were measured. The hemoglobin concentration in proteins was calculated from the obtained values. The results are shown in Table 3.

**Table 3**

| Sample No. | Hemine peak (A) | Protein concentration (B) (mg/ml) | Hemoglobin concentration [(A)/(B)] |
|---|---|---|---|
| 10 | 6.29 | 62.8 | 0.100 |
| 11 | 4.37 | 54.1 | 0.081 |
| 12 | 1.91 | 52.6 | 0.036 |
| 13 | 1.09 | 48.1 | 0.023 |
| 14 | 0.55 | 47.3 | 0.012 |
| 15 | 0.55 | 47.4 | 0.012 |
| 16 | 0.44 | 46.4 | 0.009 |
| 17 | 0.44 | 46.6 | 0.009 |

### Example 4

Hydrochloric acid was added to swine plasma containing hemocytes (sample 18, control) at room temperature to adjust the pH value to 4, and the mixture was stirred for 20 minutes. Precipitates were removed, and activated carbon was added to the obtained supernatant (sample 19) in an amount of 15% by weight based on the amount of proteins. The mixture was stirred in this state for 10 minutes (sample 20), 30 minutes (sample 21), 60 minutes (sample 22), 120 minutes (sample 23), 180 minutes (sample 24) or 24 hours (sample 25). The added activated carbon was removed by filtration, and sodium hydroxide was added to the filtrate to adjust the pH value to 7. The protein concentration and hemoglobin content were measured. The hemoglobin concentration in proteins were calculated from these values. The results are shown in Table 4.

**Table 4**

| Sample No. | Hemine peak (A) | Protein concentration (B) (mg/ml) | Hemoglobin concentration [(A)/(B)] |
|---|---|---|---|
| 18 | 6.02 | 68.3 | 0.088 |
| 19 | 4.76 | 56.7 | 0.084 |
| 20 | 3.57 | 55.7 | 0.064 |
| 21 | 2.94 | 54.6 | 0.054 |
| 22 | 2.10 | 55.7 | 0.038 |
| 23 | 1.19 | 54.6 | 0.022 |
| 24 | 0.70 | 54.2 | 0.013 |
| 25 | 0.13 | 47.9 | 0.003 |

### Example 5

To 1 kg of swine plasma was added 200 ml of a 2% aqueous solution of sodium alginate, and the mixture was stirred at 30°C for 1 hour. Hydrochloric was added to the solution to adjust the pH value to 3.8, the solution was maintained at room temperature for 2 hours with stirring, and precipitates were removed by filtration. The obtained solution was concentrated and dried by a spray drier to obtain a plasma powder. The smell of the obtained plasma powder was considerably moderated, compared with that of the untreated plasma.

### Example 6

To 1 kg of swine plasma was added 1 g of activated carbon, and hydrochloric acid was added to adjust the pH value to 4 and the mixture was stirred at room temperature for 3 hours. Then 1,000 ml of an aqueous solution containing 0.1% by weight of sodium alginate was added to the formed solution and insoluble substances were removed. The obtained solution was subjected to desalting concentration using an ultrafiltration (UF) membrane and then dried by a spray drier to obtain a plasma powder. The coloration and smell of the obtained plasma powder were considerably moderated, compared with those of the untreated plasma.

### Example 7

To 1 kg of swine plasma were added 1 g of activated carbon and 1 g of sodium alginate, and hydrochloric acid was added to adjust the pH value to 4 and the mixture was stirred at room temperature for 3 hours. Precipitates were removed by filtration and the obtained solution was subjected to desalting concentration using a UF membrane and dried by a spray drier to obtain a plasma powder. The coloration and smell were considerably moderated, compared with those of the untreated plasma.

### Example 8 and 9

By using a ceramic filter (supplied by NGK Insulators) having a pore size of 1.0 µm (Example 8) or 0.2 µm) (Example 9 and a filtration area of 0.48 m², cross-flow filtration of 200 ℓ of decolored and deodorized plasma (obtained in Example 3 as sample No. 12) was carried out. The liquid before the treatment, the filtrates and the concentrate were compared with one another with respect to the numbers of particles and living fungi, the protein concentration and the permeation rate. The number of particles was measured by using a laser beam machine, and the number of living fungi was measured by using a standard agar medium. Also the protein concentration was measured. The results are shown in Tables 5 and 6. The obtained filtrate and the liquid before the treatment were concentrated by using a concentrating film (TS-30 supplied by Tosoh), and these liquids were compared with respect to the rate of plasma concentration. It was found that, in the case of the filtrate, the initial rate was 1.5 times as high as the initial rate in the case of the liquid before the treatment.

The membrane concentrate of the filtrate was spray-dried to obtain a plasma powder. A 10% aqueous solution of the obtained plasma powder was prepared and the aqueous solution was gelled. The obtained gel was whiter than the gel obtained when the treatment was not carried out, and the commercial value was increased.

**Table 5**

| (Example 8 | | | | |
|---|---|---|---|---|
| | Number of particles (x10⁴ per 10 ml) | Protein concentration (mg/ml) | Number of living fungi (per ml) | Permeation rate (P₂/m²·hr) |
| Liquid before treatment | 198000 | 52.5 | 8 | - |
| Filtrate after 2 min. | 1133 | 51.1 | 0 | 50 |
| Filtrate after 150 min. | 379 | 50.3 | 0 | 12.8 |
| Concentrate after 150 min. | 334000 | 58.1 | 10 | - |

**Table 6**

| (Example 9 | | | | |
|---|---|---|---|---|
| | Particles (x10⁴ per 10 ml) | Protein concentration (mg/ml) | Number of living fungi (per ml) | Permeation rate (P₂/m²·hr) |
| Liquid before treatment | 198000 | 52.5 | 8 | - |
| Filtrate after 2 min. | 302 | 49.3 | 0 | 110 |
| Filtrate after 90 min. | 686 | 10.6 | 0 | 10 |
| Concentrate after 90 min. | 304000 | 68.3 | 9 | - |

### Example 10

To 100 kg of swine plasma were added 2 kg of activated carbon and 10 ℓ of a 0.1% aqueous solution of sodium alginate, and hydrochloric acid was added to adjust the pH value of the solution to 4. The solution was stirred at 25°C for 3 hours. The formed precipitates and added activated carbon were removed by filtration using a cloth filter (having a pore size of 15 to 30 µm). Sodium hydroxide was added to the filtrate to adjust the pH value to 7. The obtained solution was subjected to desalting concentration using a UF membrane and dried by a spray drier to obtain a plasma powder. The coloration and smell of the obtained plasma powder were considerably moderated, compared with those of the untreated plasma.

### Example 11

To 100 kg of swine plasma were added 4 kg of activated carbon and 10 ℓ of a 0.1% aqueous solution of sodium alginate, and hydrochloric acid was added to the solution to adjust the pH value to 4. The solution was stirred at 25°C for 3 hours. The formed precipitates and added activated carbon were removed by filtration using the same cloth filter as used in Example 10, and sodium hydroxide was added to the filtrate to adjust the pH value to 7. The obtained solution was subjected to filtration using a ceramic filter (having a pore size of 1.0 µm). The obtained solution was subjected to desalting concentration using a UF membrane and dried by a spray drier to obtain a plasma powder. The coloration and smell of the obtained plasma powder were considerably moderated, compared with the untreated plasma.

### INDUSTRIAL APPLICABILITY

In plasma treated according to the process of the present invention, coloration and the generation of an unpleasant smell are controlled, compared with untreated plasma, and therefore, this treated plasma is valuable as a food additive. Furthermore, if the process comprising the treatment with a polymeric electrolyte having a carboxyl group is adopted, since a finely divided adsorbent and proteins insolublized by the modification are removed, a particular operation for removing these substances is not necessary, and when the solution obtained by the treatment is concentrated by using a membrane, the membrane is not damaged.

Moreover, if plasma having a hemoglobin content reduced in advance by effecting the modification by controlling the pH value is used, substances causing coloration can be removed more efficiently. Since it is considered that hematin (iron ion) contained in the hemoglobin removed by this treatment causes peroxidation of a lipid, it is deemed that plasma obtained through this treatment is suitable as a food or a food additive.

Impurities, especially a decoloring agent or deodorizing agent such as activated carbon, living fungi and modified insolublized proteins, which are contained in decolored and deodorized plasma, are removed from plasma obtained by the ceramic filter treatment, and therefore, the commercial value can be increased by the ceramic filter treatment. Moreover, since the filter used is composed of a ceramic material, even if clogging occurs, the filter can be regenerated by re-firing, and therefore, the durability is very good. Still further, if the membrane concentration step is added, since insoluble substances have already been removed, the membrane efficiency is improved and deterioration of the membrane is controlled. As seen from the foregoing description, according to the process of the present invention, a good durability and a good operation efficiency can be attained.

## Claims

1. A process for the purification of plasma by removing coloration-causing substances including hemoglobin from the plasma, which comprises the steps of:
adding an acidic substance to plasma to adjust the pH value to 3 to 6 or adding a basic substance to plasma to adjust the pH value to 9 to 13;
maintaining the plasma at a temperature of 0 to 40°C with stirring whereby the hemoglobin is modified; and thereafter
removing the modified hemoglobin from the plasma;
said process for the purification of plasma being free from the step of treating the plasma with an oxidizing agent.

2. The process according to claim 1, wherein a basic substance or acidic substance is added to the modified hemoglobin to adjust the pH value to 7 to 8, and thereafter, the modified hemoglobin is removed from the plasma.

3. The process according to claim 1 or 2, which further comprises the step of, before or after adding the acidic substance to the plasma to adjust the pH value to 3 to 6, but before maintaining the pH-adjusted plasma at a temperature of 0 to 40°C, adding 0.5 to 10% by weight, based on the weight of the plasma, of activated carbon to the plasma whereby coloration-causing substances including hemoglobin are adsorbed by the activated carbon; and wherein the step of removing the modified hemoglobin is effected by removing the activated carbon from the plasma.

4. A process for the purification of plasma by removing coloration-causing substances including hemoglobin from the plasma, which comprises the steps of:
adding 0.001 to 10% by weight, based on the weight of the plasma, of a polymeric electrolyte having a carboxyl group to the plasma;
maintaining the mixture of the polymeric electrolyte and the plasma at a temperature of 0 to 50°C;
adding an acid to the mixture to adjust the pH value to 1 to 5, whereby the hemoglobin is modified; and thereafter,
removing the modified hemoglobin from the plasma;
said process for the purification of plasma being free from the step of treating the plasma with an oxidizing agent.

5. The process according to claim 4, wherein the polymeric electrolyte having a carboxyl group is selected from the group consisting of alginic acid, sodium alginitate, polyacrylic acid, sodium polyacrylate and carboxymethyl cellulose.

6. The process according to claim 4 or 5, wherein activated carbon is added together with the polymeric electrolyte having a carboxyl group.

7. The process according to any of claims 1 to 6, wherein the removal of the modified hemoglobin from the plasma is effected by using a ceramic filter.

8. The process according to claim 7, wherein the ceramic filter has a pore size not larger than 25 µm.

## Patentansprüche

1. Ein verfahren zur Reinigung von Plasma durch Entfernen von Färbung verursachenden Substanzen einschließlich Hämoglobin aus dem Plasma, enthaltend die Stufen
Hinzufügen einer sauren Substanz zum Plasma, um den pH-Wert auf 3 bis 6 einzustellen, oder Hinzufügen einer basischen Substanz zum Plasma, um den pH-wert auf 9 bis 13 einzustellen,
Rühren des Plasmas bei einer Temperatur von 0 bis 40°C, wobei das Hämoglobin modifiziert wird und anschließend
Entfernen des modifizierten Hämoglobins aus dem Plasma,
wobei dieses Verfahren zur Reinigung des Plasmas keine Behandlung des Plasmas mit einem Oxidationsmittel enthält.

2. Verfahren nach Anspruch 1, worin die basische oder saure Substanz dem modifizierten Hämoglobin hinzugefügt wird, um den pH-wert auf 7 bis 8 einzustellen, und anschließend das modifizierte Hämoglobin vom Plasma entfernt wird.

3. Verfahren nach Anspruch 1 oder 2, welches eine weitere Behandlungsstufe enthält, worin vor oder nach dem Hinzufügen der sauren Substanz zum Plasma, um den pH-Wert auf 3 bis 6 einzustellen, aber vor dem Behandeln des Plasmas mit einem eingestellten pH-Wert bei einer Temperatur von 0 bis 40°C 0,5 bis 10 Gew.%, bezogen auf das Plasmagewicht, Aktivkohle zu dem Plasma hinzugegeben werden, wodurch Färbung verursachende Substanzen einschließlich Hämoglobin an der Aktivkohle adsorbiert werden, und worin die Stufe der Entfernung des modifizierten Hämoglobins durchgeführt wird durch Entfernen der Aktivkohle aus dem Plasma.

4. Ein Verfahren zur Reinigung von Plasma durch Entfernen färbungsverursachender Substanzen einschließlich Hämoglobin aus dem Plasma, enthaltend die Stufen
Hinzufügen von 0,001 bis 10 Gew.%, bezogen auf das Plasmagewicht, eines polymeren Elektrolyten mit einer Carboxylgruppe zu dem Plasma,
Behandeln des Gemischs aus polymerem Elektrolyten und dem Plasma bei einer Temperatur von 0 bis 50°C,
Hinzufügen einer Säure zu dem Gemisch, um den pH-Wert auf 1 bis 5 einzustellen, wobei das Hämoglobin modifiziert wird und anschließend
Entfernen des modifizierten Hämoglobins aus dem Plasma,
wobei dieses Verfahren zur Reinigung von Plasma keine Behandlung des Plasmas mit einem Oxidationsmittel enthält.

5. Verfahren nach Anspruch 4, worin der polymere Elektrolyt mit einer Carboxylgruppe ausgewählt ist aus der aus Alginsäure, Natriumalginat, Polyacrylsäure, Natriumpolyacrylat und Carboxymethylcellulose bestehenden Gruppe.

6. Verfahren nach Anspruch 4 oder 5, worin die Aktivkohle gemeinsam mit dem polymeren Elektrolyten mit einer Carboxylgruppe hinzugegeben wird.

7. Verfahren nach einem der Ansprüche 1 bis 6, worin das Entfernen des modifizierten Hämogloblns aus dem Plasma unter Verwendung eines Keramikfilters durchgeführt wird.

8. Verfahren nach Anspruch 7, worin der Keramikfilter eine Porengröße von nicht größer als 25 µm besitzt.

## Revendications

1. Procédé pour la purification de plasma par élimination de substances colorantes comprenant l'hémoglobine à partir du plasma, qui comprend les étapes consistant à :
- ajouter une substance acide à du plasma pour régler le pH à une valeur comprise entre 3 et 6 ou ajouter une substance basique à du plasma pour régler le pH à une valeur comprise entre 9 et 13;
- maintenir le plasma à une température comprise entre 0 et 40°C sous agitation, l'hémoglobine étant ainsi modifiée; et par la suite
- éliminer l'hémoglobine modifiée à partir du plasma;
ledit procédé pour la purification de plasma ne comprenant pas l'étape de traitement du plasma avec un agent oxydant.

2. Procédé selon la revendication 1, dans lequel on ajoute une substance basique ou une substance acide à l'hémoglobine modifiée pour régler le pH à une valeur comprise entre 7 et 8, et par la suite, on élimine l'hémoglobine modifiée à partir du plasma.

3. Procédé selon la revendication 1 ou 2, qui comprend de plus l'étape consistant à, avant ou après l'ajout de la substance acide au plasma pour régler le pH à une valeur comprise entre 3 et 6, mais avant le maintien du plasma au pH réglé à une température comprise entre 0 et 40°C, ajouter de 0,5 à 10% en poids, par rapport au poids du plasma, de charbon actif au plasma, les substances colorantes comprenant l'hémoglobine étant ainsi adsorbées par le charbon actif; et dans lequel l'étape d'élimination de l'hémoglobine modifiée est réalisée par élimination du charbon actif à partir du plasma.

4. Procédé pour la purification de plasma par élimination de substances colorantes comprenant l'hémoglobine à partir du plasma, qui comprend les étapes consistant à :
- ajouter 0,001 à 10% en poids, par rapport au poids du plasma, d'un électrolyte polymère ayant un groupe carboxy au plasma;
- maintenir le mélange de l'électrolyte polymère et du plasma à une température comprise entre 0 et 50°C;
- ajouter un acide au mélange pour régler le pH à une valeur comprise entre 1 et 5, l'hémoglobine étant ainsi modifiée; et par la suite,
- éliminer l'hémoglobine modifiée à partir du plasma;
ledit procédé pour la purification de plasma ne comprenant pas l'étape de traitement du plasma avec un agent oxydant.

5. Procédé selon la revendication 4, dans lequel l'électrolyte polymère ayant un groupe carboxy est choisi parmi l'acide alginique, l'alginate de sodium, l'acide polyacrylique, le polyacrylate de sodium et la carboxyméthyl cellulose.

6. Procédé selon la revendication 4 ou 5, dans lequel le charbon actif est ajouté simultanément avec l'électrolyte polymère ayant un groupe carboxy.

7. Procédé selon l'une quelconque des revendications 1 à 6, dans lequel l'élimination de l'hémoglobine modifiée à partir du plasma est réalisée en utilisant un filtre céramique.

8. Procédé selon la revendication 7, dans lequel le filtre céramique a une dimension de pore d'au plus 25 µm.
